# EUROPEAN PATENT APPLICATION

(11) **EP 4 289 617 A1**
(43) Date of publication of application: **13.12.2023**
(21) Application number: 23171886.7
(22) Date of filing: 05.05.2023
(51) Int. Cl.: B32B 21/04, B32B 21/12, B32B 21/13, B32B 21/14

(54) **A MULTI-LAYERED CORE BOARD, A DOOR, AND A METHOD FOR MANUFACTURING A MULTI-LAYERED CORE**

(30) Priority: 05.05.2022 FI 20225391
(71) Applicant: Metsäliitto Osuuskunta, 02100 Espoo (FI)
(72) Inventor: SOKKA, Kasperi, 02100 Espoo (FI)
(74) Representative: Laine IP Oy

(57) **Abstract**

According to an example aspect of the present invention, there is provided a core board for a door, the core board having a multi-layered structure and comprising: a first wood-based panel; a second wood-based panel; between the first wood-based panel and the second wood-based panel, a thermally insulating layer comprising or consisting of a wood-based material, wherein the density of the thermally insulating layer is less than the density of the first and the second wood-based panels, wherein the core board has a U value of less than 1.8 W/m²K.

## Description

### FIELD

The present invention relates to core boards for doors.

### BACKGROUND

Previously known are various types of composite boards which are manufactured by combining wood-based materials and at least one other material. When manufacturing a composite board, it is sought to maximize the good properties and to minimize the bad properties in the end product.

It is previously known to form composite boards by mixing or combining together various raw materials, for example various layers, and bonding the materials or layers to each other, in order to create a composite board. It is also known to form composite boards by coating methods, for example, a wood panel with various coatings comprising non-wood materials.

The use of various types of gluing and pressing methods in the manufacture of composite boards is also previously known.

It is an aim of at least some embodiments of the present invention to provide improved composite structures and composite boards suitable for thermal insulation of doors.

### SUMMARY OF THE INVENTION

The invention is defined by the features of the independent claims. Some specific embodiments are defined in the dependent claims.

According to a first aspect of the present invention, there is provided a core board for a door, the core board having a multi-layered structure and comprising: a first wood-based panel; a second wood-based panel; between the first wood-based panel and the second wood-based panel, a thermally insulating layer comprising or consisting of a wood-based material, wherein the density of the thermally insulating layer is less than the density of the first and the second wood-based panels, wherein the core board has a U value of less than 1.8 W/m²K.

Various embodiments of the first aspect, or any of the below described second, third, fourth, fifth, sixth and seventh aspects, may comprise at least one feature from the following bulleted list:
- The density of the thermally insulating layer is less than 300 kg/m³.
- The density of the wood-based panels is more than 500 kg/m³.
- The thermally insulating layer consists of a wood-based material and optionally adhesive or resin.
- The wood based material of the thermally insulating layer comprises a cork-based material.
- The wood based material of the thermally insulating layer consists of a cork-based material, such as torrefied cork oak or agglomerated cork or composite cork material. Preferably the thermally insulating layer does not comprise any other wood based materials.
- At least 80 wt-%, such as at least 90 wt-% of the thermally insulating layer consists of cork oak, such as torrefied cork oak.
- The cork-based material comprises or consists of cork oak (*Quercus suber* or *Quercus variabilis*)*.*
- The cork-based material comprises or consists of torrefied cork oak.
- The cork-based material comprises a composite cork material which preferably comprises torrefied cork oak and a binder.
- The cork-based material has a density in the range 60 to 250 kg/m³, for example less than 200 kg/m³.
- The wood based material of the thermally insulating layer comprises a balsa tree based material.
- The wood based material of the thermally insulating layer consists of a balsa tree based material, such as end grain balsa wood or balsa plywood. Preferably the thermally insulating layer does not comprise any other wood based materials.
- Preferably, at least 80 wt-%, such as at least 90 wt-% of the thermally insulating layer consists of a balsa tree based material, such as end grain balsa wood or balsa plywood.
- The balsa tree based material comprises *Ochroma pyramidale.*
- The balsa tree based material has a density less than 380 kg/m³, such as less than 350 kg/m³.
- The balsa tree based material has a density in the range 60 to 380 kg/m³.
- The thermally insulating layer comprises a balsa plywood board or an end-grain balsa panel.
- The thermally insulating layer comprises at least one foam-formed wood pulp layer manufactured on a wire.
- The thermally insulating layer comprises at least one foam-formed wood pulp layer manufactured in a mould.
- The wood pulp comprises mechanical pulp, thermomechanical pulp or chemithermomechanical pulp or any mixture thereof.
- The wood based material of the thermally insulating layer consists of moulded wood pulp obtained from a foamed fibrous composition by a foam-forming method in a mould. Preferably the thermally insulating layer does not comprise any other wood based materials.
- The thermally insulating layer comprises a monolithic material.
- The thermally insulating layer has a substantially uniform density throughout the material.
- The thermally insulating layer has been attached to said wood based panels by adhesive layers.
- The first wood-based panel, the second wood-based panel, and the thermally insulating layer are in the form of substantially planar boards.
- At least 80 wt-%, such as at least 90 wt-% of the material of the wood-based panel is wood material, such as wood chips, wood strands, wood fibres, wood veneers and/or solid wood.
- The wood-based panel comprises a multi-layered wood veneer product comprising a plurality of wood veneer layers joined to each other by adhesive layers.
- At least one, preferably both of the first and second wood-based panels comprise an LVL board.
- At least one, preferably both of the first and second wood-based panels comprise a plywood board.
- The multilayered wood veneer product comprises a phenolic coating layer, for example a paper substrate impregnated with phenolic resin.
- The core board comprises less than 5 wt-% thermoplastic materials.
- The core board has an U value of less than 1.6 W/m²K, such as less than 1.4 W/m²K, for example less than 1.0 W/m²K.
- The core board comprises a first wood-based panel comprising an LVL board or a plywood board; a second wood-based panel comprising an LVL board or a plywood board; between the first wood-based panel and the second wood-based panel, a thermally insulating layer comprising agglomerated cork or torrefied cork oak or composite cork material.
- The core board comprises a first wood-based panel comprising an LVL board or a plywood board; a second wood-based panel comprising an LVL board or a plywood board; between the first wood-based panel and the second wood-based panel, a thermally insulating layer comprising balsa plywood or end-grain balsa wood.

According to a second aspect of the present invention, there is provided a door, preferably an entrance door, comprising the core board according to the first aspect. Preferably the door has an U value of less than 1.8 W/m²K.

According to a third aspect of the present invention, there is provided a method for manufacturing a multi-layered core board for a door, the method comprising: providing a first wood-based panel and a second wood-based panel; arranging a thermally insulating layer comprising or consisting of a wood-based material between said wood-based panels and applying adhesive layers between the wood based panels and the thermally insulating layer; curing the adhesive layers to join the wood-based panels and the thermally insulating layer to each other, to obtain the multi-layered core board, wherein the density of the thermally insulating layer is less than the density of the first and the second wood-based panels, and wherein the core board has a U value of less than 1.8 W/m²K. Preferably said curing comprises pressing in an elevated temperature, such as hot-pressing.

According to a fourth aspect of the present invention, there is provided a method for manufacturing a multi-layered core board for a door, the method comprising: providing a plurality of wood veneer layers; stacking said wood veneer layers and a layer of a thermally insulating material and applying adhesive layers between the layers, to form a stack, wherein the layer of a thermally insulating material forms an inner layer, preferably the centremost layer, in the stack; and curing the adhesive layers to join the layers to each other, to obtain the multi-layered core board, wherein the thermally insulating layer comprises or consists of a wood-based material, wherein the density of the thermally insulating layer is less than the density of the first and the second wood-based panels, and wherein the core board has a U value of less than 1.8 W/m²K. Preferably said curing comprises pressing in an elevated temperature, such as hot-pressing.

According to a fifth aspect of the present invention, there is provided use of torrefied cork oak in a thermally insulating layer or a part thereof in a door, particularly in a core board of a door.

According to a sixth aspect of the present invention, there is provided use of a balsa tree based material in thermally insulating layer or a part thereof in a door, particularly in a core board of a door.

According to a seventh aspect of the present invention, there is provided use of foam-formed moulded pulp in a thermally insulating layer or a part thereof in a door, particularly in a core board of a door.

Various embodiments of the seventh aspect may comprise at least one feature from the following bulleted list:
- The wood pulp comprises mechanical pulp, thermomechanical pulp or chemithermomechanical pulp.
- The wood pulp comprises moulded pulp.

### Advantages of the invention

Some embodiments of the invention may provide core boards suitable for doors and exhibiting improved thermal insulation properties.

The core board according to some embodiments of the present invention may be suitable for use as a structure that is both load-bearing and thermally insulating in a door or a construction panel or other similar structure.

The core board according to some embodiments may provide a substitute for currently used polystyrene foam, polyurethane (PU) foam and polyisocyanurate (PIR) foam thermal insulation materials in doors or construction panels or other similar structures.

### BRIEF DESCRIPTION OF THE DRAWINGS

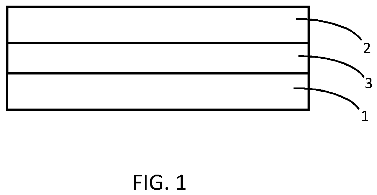

FIGURE 1 illustrates a core board in accordance with at least some embodiments of the present invention.

### EMBODIMENTS

### DEFINITIONS

Unless otherwise stated herein or clear from the context, any percentages referred to herein are expressed as percent by weight based on a total weight of the respective composition.

"U value", also known as thermal transmittance, is the rate of transfer of heat through a structure, which can be a single material or a composite, divided by the difference in temperature across that structure. The units of measurement are W/m²K. The better-insulated a structure is, the lower the U-value will be.

U value of a structure may be calculated according to BS EN ISO 6946:2017.

Generally, U value of a structure may be calculated by using a commercial software, such as DOF-Lämpö (by D.O.F. tech Oy), for example according to European standards, for example as a weighted average value. Any other suitable commercial software or library for U values may be utilized.

The term "board" is used interchangeably with "panel" and stands for a structure that has at least one planar surface. Preferably the "board" (or "panel") has two opposite planar surfaces which are generally orientated in parallel. The term "board" or "panel" may refer to a separate, discrete object or to a layer that forms an integral part of a larger object.

In the present context, "one step pressing" or "single pressing" stands for a pressing procedure wherein a stack, which is formed by overlapping and/or superimposed layers of structural material and adhesive, is pressed by a pressing operation, typically carried out at one pressing station, until a predetermined compression strength of the board is obtained. The pressing can be carried out applying continuously increased compression or by applying compression at successive stages of different pressures.

"Hot pressing" stands for pressing at increased temperature and surface pressure (in comparison to ambient conditions) over a period of time.

"Torrefaction" may refer to a pyrolysis process.

"Cork-based material" may refer to a cork-based material from natural sources or at least comprising cork-based material from natural sources, typically from bark of cork oak tree. Cork-based material is considered to be a wood-based material.

"Torrefied cork oak" may refer to cork oak treated by a pyrolysis process.

"Agglomerated cork" may refer to a cork-based material that is made by grinding up of off-cuts of natural cork bark to form granules and then gluing the granules back together to form blocks. Alternatively the granules may be compression moulded directly. Once the cork off-cuts have been ground up, the resulting granules may be separated by density and size, to produce agglomerated cork with different technical characteristics, particularly different densities. Agglomerated cork is typically a mixture of natural cork and a synthetic bonding agent, such as polyurethane adhesive.

"Expanded cork" may refer to a cork-based material that is manufactured by using, as the starting material, cork granules obtained directly from the cork oak tree bark. The resin found within the cork granules themselves is used as the bonding agent for bonding the cork granules together. The cork bark that is selected to make expanded cork may be bark from young cork oak trees or from the upper branches where there is a sufficient amount of resin in the bark. The cork bark is fed through a grinding machine to produce granules, but the granules are typically not sorted by density. The granules are fed into an autoclave in which pressure and super-heated steam is applied. The high temperature in the autoclave causes the granules to swell up and release the resins they contain. Because the granules are in a confined space, the expanded granules are compressed together. Once the pressure is released, the resin originating from the granules binds the granules together to make a block. Expanded cork usually contains more air than agglomerated cork. The density of expanded cork may depend on how much pressure is applied in the production process.

The terms "balsa" and "balsa tree" may be used interchangeably.

The term "plastic material" may refer to a thermoplastic material, typically a thermoplastic polymeric material.

As used herein, the term "polymer" describes an organic substance composed of a plurality of repeating structural units (backbone units) covalently connected to one another. The term "polymer" as used herein encompasses organic and inorganic polymers and further encompasses one or more of a homopolymer, a copolymer or a mixture thereof (a blend). The term "homopolymer" as used herein describes a polymer that is made up of one type of monomeric units and hence is composed of homogenic backbone units. The term "copolymer" as used herein describes a polymer that is made up of more than one type of monomeric units and hence is composed of heterogenic backbone units. The heterogenic backbone units can differ from one another by the pendant groups thereof.

In the present invention it has been surprisingly observed that a combination of wood-based panels and particular low-density wood-based materials may provide significant improvements in thermal insulation properties of composite boards.

Typically, "wood-based material" or "wood-based panel" or "wood-based layer" refers to a material or panel or layer of which at least 50 wt-% is wood or derived from wood.

"Core board" may refer to a board configured to serve as a structural planar board that constitutes a core for example of a door. There may be one or more surface finishing or coating layers on one of both sides of the core board. The core board typically forms an inner part or the innermost part or the innermost board in a planar article, such as in a door or in a door blank.

In an embodiment, the core board is a multi-layered structure comprising several layers, typically planar boards or planar sheets, stacked on top of each other and joined to each other for example by adhesive layers.

In an embodiment, all layers of the core board consist of a wood-based material and optionally adhesive or resin, the layers being joined to each other by adhesive layers.

### Wood-based panels

The present core board typically comprises at least two wood-based panels, which preferably form the outermost or exposed layers of the core board.

In some embodiments, the core board comprises at least three wood-based panels, such as at least four wood-based panels, for example at least five wood-based panels.

In some embodiments, the core board comprises 2 to 15, such as 2 to 10, such as 2 to 5 wood-based panels.

In some embodiments, the core board comprises at least one, such as at least two, such as at least three thermally insulating layers.

In some embodiments, the core board comprises 1 to 10, such as 1 to 5, such as 1 to 3 thermally insulating layers.

Typically, there is a thermally insulating layer in each interspace between the wood-based panels, providing alternation of wood-based panels and thermally insulating layers. The outermost layers are generally wood-based panels.

In one embodiment, the core board comprises exactly two wood-based panels, such as panels with a thickness of at least 10 mm, which preferably form the outermost or exposed layers of the core board.

In one embodiment, the core board consists of exactly two wood-based panels, which form the outermost layers of the core board, and a thermally insulating layer between the wood-based panels. The wood-based panels and the thermally insulating layer have been joined together by an adhesive.

In one embodiment, the core board consists of exactly three layers, and each of said layers comprises or consists of a wood-based material and optionally adhesive or resin. Two wood-based panels form the outermost layers of the core board, and a thermally insulating layer between the wood-based panels forms the inner layer of the core board. Preferably the structure of the core board is symmetrical across its thickness.

In one embodiment, the core board consists of 2 to 10 wood-based panels and respectively 1 to 9 thermally insulating layers. There is a thermally insulating layer in each interspace between the wood-based panels, providing alternation of wood-based panels and thermally insulating layers. The outermost layers are wood-based panels. The wood-based panels and the thermally insulating layers have been joined together by an adhesive.

One or more of the wood-based panels may still be coated by a wood based layer, such as a wood veneer or a paper-based coating. Such a wood-based coating layer may have a thickness of less than 10 mm, for example less than 5 mm.

Said two wood-based panels are separated from each other by at least one thermally insulating layer.

Preferably, the wood-based panels and the thermally insulating layer or layers are connected to each other only via adhesive or glue layers. Thus, there are typically no further layers or materials between the wood-based panels and the thermally insulating layer or layers.

Typically, the wood-based material in the wood-based panel is produced from softwood or hardwood, such as spruce, pine, larch, birch, poplar, aspen, alder, maple, eucalyptus, balsa or mixed tropical hardwood or from mixtures thereof.

Preferably, the wood-based material in the wood-based panel comprises hardwood, such as birch. In particular, the wood-based panel or panels comprise only hardwood, such as birch, as the wood-based material.

The thickness of the wood based panel is generally from about 0.5 to 50 mm, such as 5 to 40 mm, in particular about 10 to 30 mm.

The thickness of the wood based panel may be at least 5 mm, such as at least 10 mm, for example at least 15 mm.

The wood-based panel may have a single-layer structure or a multi-layer structure. A multi-layered wood-based panel may comprise both wood-based layers and additionally layers of other materials, such as adhesive layers and/or functional non-wood layers.

In an embodiment, the wood-based panel comprises an engineered wood product, such as an engineered wood panel.

In an embodiment, the wood-based panel comprises a solid wood-based panel or a solid wood panel.

For example, each of the wood-based panels may be independently selected from the following group: wood board, wood beam, wood veneer, fibreboard, chipboard, lumber, glue-laminated wood, plywood board, LVL (laminated veneer lumber) board, LVL beam, OSB (oriented strand board) board, and any combinations thereof.

In one embodiment, the wood-based panel comprises a multi-layered wood veneer board or a multi-layered wood veneer product.

In one embodiment, the wood-based panel comprises an LVL board.

In one embodiment, the wood-based panel comprises a plywood board.

In one embodiment, the wood-based panel comprises a plywood board incorporating one or more functional layers.

In a preferred embodiment, the wood-based panels have been manufactured by a process involving single pressing of the layers of the wood-based panel to join them together, for example by hot-pressing.

Typically, the thermally insulating layer is attached or glued between the wood-based panels, generally after said manufacturing of the wood-based panels.

In one embodiment, the thermally insulating layer is attached or glued to the wood-based panels, preferably directly onto surfaces of the wood-based panels, whereby the thermally insulating layer becomes located between the wood-based panels.

In one embodiment, the wood-based panel consists of a wood veneer.

In one embodiment, the wood-based panel comprises a solid wood panel, such as a spruce panel or a birch panel. The solid wood panel may be edge-glued or vertically glued.

The wood-based panel may be a coated panel or an uncoated panel.

In some embodiments, the two or outermost wood-based panels are similar, such as made of or comprising the same wood-based material, to provide a substantially symmetrical structure for the core board.

Preferably, at least 50 wt-%, such as at least 80 wt-%, such as at least 90 wt-% of the material of the wood-based panel is wood material, such as wood chips, wood strands, wood fibres, wood veneers and/or solid wood.

In an embodiment, the wood-based panel comprises less than 5 wt-%, such as less than 2 wt-% plastic materials. In an embodiment, the wood-based panel does not comprise any plastic materials. In an embodiment, the wood-based panel is free from or substantially free from plastic materials.

Preferably, at least 50 wt-%, such as at least 80 wt-%, such as at least 90 wt-% of the material of the core board is wood material, such as wood chips, wood strands, wood fibres, wood veneers and/or solid wood.

In an embodiment, the core board comprises less than 5 wt-%, such as less than 2 wt-% plastic materials. In an embodiment, the core board does not comprise any plastic materials. In an embodiment, the core board is free from or substantially free from plastic materials.

In an embodiment, the density of the wood-based panel is at least 400 kg/m³, such as at least 500 kg/m³, such as 500 to 1000 kg/m³.

### Thermally insulating layer

The thermally insulating layer is preferably made of or comprises a wood-based material, such as a cork based material or a balsa tree based material or moulded pulp. The advantage of using a wood-based material is that the entire core board can be made of natural, wood-based materials, without fossil-based materials, such as plastic materials. Additionally, the manufacturing process of the core board may be simplified as the materials of the wood-based panels and the thermally insulating layer are more compatible and similar to each other.

Typically, said thermally insulating layer is a layer that is distinct from the wood-based panels and has a different composition.

In an embodiment, the thermally insulating layer comprises or consists of a monolithic material which preferably has a substantially uniform density throughout the material.

In another embodiment, the thermally insulating layer comprises or consists of a multi-layered structure.

Preferably, at least 50 wt-%, such as at least 80 wt-%, such as at least 90 wt-% of the material of the thermally insulating layer is wood-based material.

In an embodiment, the thermally insulating layer comprises less than 5 wt-%, such as less than 2 wt-% plastic materials, such as thermoplastic materials. In an embodiment, the thermally insulating layer does not comprise any plastic materials.

In an embodiment, the thermally insulating layer is in the form of a planar board.

Preferably, the thermally insulating layer has a density that is lower, such as at least 50% lower, for example at least 70% lower than the density of the wood-based panels.

In an embodiment, the thermally insulating layer has a density in the range 60 to 380 kg/m³, such as 60 to 220 kg/m³, such as 60 to 110 kg/m³.

In an embodiment, the thermally insulating layer has a substantially lower thermal conductivity than the wood-based panels.

In an embodiment, the thermally insulating layer has a thermal conductivity which is at least 20% lower, in particular 40% to 95% lower, such as 60% to 80% lower, than that of the wood-based panels.

In an embodiment, the thermally insulating layer is configured to be load-bearing in a door comprising the present core board.

In an embodiment, the thermally insulating layer is in the form of a planar, coated board. For example, the thermally insulating layer may comprise or consist of a layer of wood-based material and a coating layer on one or both sides of the layer of wood-based material.

The coating layer may comprise or consist of a carrier sheet, such as a carrier web or fabric or paper, which has been optionally impregnated with resin. Preferably, the coating layer comprises or consists of plant-based fibres, such as wood fibres or jute fibres or hemp fibres, and optionally resin.

### Cork-based material

In an embodiment, the wood-based material of the thermally insulating layer comprises or consists of a cork-based material.

In an embodiment, between the wood-based panels, there is at least one layer or panel comprising a cork-based material.

In some embodiments, there are one or more layers of a cork-based material between the wood-based panels, such as one cork layer between each pair of adjacent wood based panels, such as wood veneers, or between one or more of such pairs.

The cork-based material may comprise or consist of any suitable cork-based material.

In an embodiment, the cork based material has a density in the range 60 to 150 kg/m³, such as 60 to 110 kg/m³, such as 80 to 140 kg/m³, such as 100 to 130 kg/m³.

In an embodiment, the cork based material has a density less than 150 kg/m³, such as less than 130 kg/m³, such as less than 110 kg/m³.

For example, the cork-based material may be selected from the following group: cork oak, torrefied cork oak, a composite cork material or any combination thereof.

For example, the cork-based material may be selected from the following group: cork oak, torrefied cork oak, agglomerated cork, a composite cork material or any combination thereof.

For example, the cork-based material may be selected from the following group: cork oak, torrefied cork oak, agglomerated cork, expanded cork, a composite cork material or any combination thereof.

Preferably, the cork-based material is from *Quercus suber* or from *Quercus variabilis.*

In an embodiment, the cork-based material comprises cork oak that has been heat-treated or pyrolyzed in a temperature between 200 and 300 °C.

In some embodiments, the cork-based material comprises or consists of torrefied cork oak.

Preferably, at least 90 wt-%, such as at least 95 wt-% of the cork-based material consists of cork oak, such as torrefied cork oak.

A torrefying treatment, or torrefaction, of a material typically comprises a heat treatment.

Typically, torrefaction of cork oak is a slow pyrolysis process in an elevated temperature (such as 150 to 300 °C), in normal pressure and in an inert-gas-protected atmosphere. Torrefaction may remove moisture and part of volatiles from the cork oak, initiate chemical reactions of polymers in cell walls, improve substance energy density and grindability, and/or homogenize the chemical structure.

An advantage of using torrefied cork oak is that it has a low thermal conductivity and thus functions as an effective thermal insulator.

In one embodiment, as a result of a torrefying treatment, the moisture content of the cork oak has been decreased, preferably to less than 2 wt-%, such as less than 1 wt-%.

In one embodiment, as a result of a torrefying treatment, the density of the cork oak has been decreased, preferably to less than 150 kg/m³, such as less than 130 kg/m³.

In one embodiment, as a result of a torrefying treatment, the fixed carbon content of the cork oak has been increased, preferably to at least 15 wt-%, such at least 20 wt-%.

In one embodiment, as a result of a torrefying treatment, the U value of the cork oak has been decreased, preferably to less than 1.8 W/m²K, such as less than 1.4 W/m²K, for example less than 1.0 W/m²K.

Preferably, at least 80 wt-%, such as at least 90 wt-%, such as at least 95 wt-% of the cork-based material consists of cork oak, preferably as such or as substantially untreated or as not chemically modified and/or as not mechanically modified.

In an embodiment, the cork-based material has been air-dried or heat-treated, preferably in ambient pressure.

In an embodiment, the cork-based material, typically cork oak, has not been mechanically modified, such as pressure treated or compressed, particularly before its incorporation into the core board.

In an embodiment, before incorporating the cork-based material to the present core board, said cork-based material has not been modified by any treatment involving elevated pressure, compared to ambient conditions. Such elevated pressure would increase the density of the cork based material.

In an embodiment, before incorporating the cork-based material to the present core board, said cork-based material has not been modified by a treatment which involves both increased pressure and increased temperature.

Preferably the cork based material does not comprise any expanded cork.

Preferably the cork based material does not comprise any expanded cork oak.

In one embodiment, before incorporating the cork-based material to the present core board, the cork-based material has been treated by a heat treatment in an elevated temperature with regard to ambient conditions, such as in a temperature in the range 100 to 350 °C, such as in the range 150 to 300 °C, for example in the range 200 to 250 °C, in order to decrease thermal conductivity thereof. Preferably the pressure is not elevated, i.e. ambient pressure is applied during said heat treatment.

In an embodiment, the cork based material comprises a composite cork material. The composite cork material may comprise a mixture of untorrefied cork oak and torrefied cork oak, and optionally a binder. The composite cork material may comprise a mixture of cork oak and a binder. The composite cork material may comprise a mixture of torrefied cork oak and a binder. The composite may further comprise functional additives.

In some embodiments, the cork based material does not comprise any binder, such as resin or glue or adhesive.

In some embodiments, the cork based material comprises a binder, such as resin or glue or adhesive.

In some embodiments, the cork based material comprises agglomerated cork.

In some embodiments, the cork based material comprises expanded cork.

### Balsa tree based material

In an embodiment, the wood based material of the thermally insulating layer comprises or consists of a balsa tree based material.

Preferably, at least 80 wt-%, such as at least 90 wt-%, such as at least 95 wt-% of the balsa tree based material consists of balsa tree.

Typically the balsa tree based material is from *Ochroma pyramidale.*

In an embodiment, the balsa tree based material comprises a balsa tree based composite material.

In an embodiment, the balsa tree based material has a density in the range 60 to 380 kg/m³, such as 120 to 220 kg/m³, such as 150 to 200 kg/m³.

In an embodiment, the balsa tree based material has a density less than 350 kg/m³, such as less than 300 kg/m³.

In an embodiment, the thermally insulated layer comprises a balsa tree based engineered wood product, such as a balsa tree based engineered wood panel.

The balsa tree based engineered wood product may be fibreboard, chipboard, glued laminated timber, end grain wood, plywood board, LVL (laminated veneer lumber) board, LVL beam, or OSB (oriented strand board) board.

In an embodiment, the thermally insulating layer comprises balsa tree in the form of sawn timber of balsa tree, glued laminated balsa tree board, end grain balsa tree board or balsa tree plywood.

In an embodiment, the thermally insulating layer comprises a multilayered balsa veneer board.

In an embodiment, the thermally insulating layer comprises a balsa plywood board.

In an embodiment, the thermally insulating layer comprises a balsa LVL board.

In an embodiment, the thermally insulating layer comprises a solid balsa tree panel.

In an embodiment the thermally insulating layer comprises an end-grain balsa panel.

Advantageously, the thermally insulating layer comprises or consists of end-grain balsa wood. End-grain balsa wood may exhibit high strength-to-weight ratio, high shear strength and high compression strength, and it may be easy to bond with an adhesive, such as adhesive resin, to the wood-based panels. End-grain balsa wood may tolerate temperature changes and be chemical resistant.

### Wood pulp

In an embodiment, the wood based material of the thermally insulating layer comprises or consists of wood pulp, such as moulded pulp.

The wood pulp may be in the form of a single-layer or multi-layered structure manufactured by a foam forming method.

In an embodiment, foam forming is a method in which wood pulp is mixed with foam, and this mixture is transferred through a headbox to a wire, where foam is removed using a vacuum. In another embodiment, the mixture is fed to a mould instead of to a wire.

In an embodiment, the thermally insulating layer comprises a moulded pulp structure, for example a single-layer or multi-layered moulded pulp structure.

In an embodiment, the moulded pulp structure comprises a multi-layered foam-formed moulded pulp structure.

The moulded pulp structure may be manufactured by any of the following methods: injection moulding, vacuum moulding, compression moulding, transfer moulding, extrusion moulding, blow moulding, dip moulding, rotational moulding, foam moulding, laminating, deep drawing, thermoforming, press forming, hydro-forming, suction forming, closed mould forming, open mould forming, dry forming or foam forming, or any combination thereof.

Preferably, the moulded pulp structure has been manufactured by a foam forming process in which a foamed fibrous suspension comprising wood pulp is fed to a mould and then shaped, dewatered and hot-pressed to final form, such as a planar board.

In an embodiment, the wood pulp comprises a cellulosic and/or a lignocellulosic fibrous material. Said cellulosic and/or a lignocellulosic material may comprise one or more of the following: chemical wood pulp, semichemical wood pulp, mechanical wood pulp, thermomechanical wood pulp, chemithermomechanical wood pulp, bleached chemithermomechanical pulp, bleached semichemical pulp, groundwood pulp, pressure groundwood pulp, stone groundwood pulp, recycled cellulosic and/or lignocellulosic fibres, fibrillated cellulose, such as microfibrillated cellulose or nanofibrillated cellulose, nanocellulose, broke, cellulosic by-products, regenerated cellulosic fibres, and any other cellulosic and/or lignocellulosic material comprising cellulosic fibres or parts of cellulosic fibres. The pulp may be bleached or unbleached or a mixture thereof.

In an embodiment, the wood pulp comprises mechanical pulp, such as groundwood pulp, for example pressure groundwood (PGW) or stone groundwood (SGW), or thermomechanical or chemithermomechanical pulp.

The wood pulp may be bleached or unbleached.

The wood pulp may manufactured from wood bark, such as pine bark.

The wood pulp may be refined wood pulp, typically refined mechanical pulp.

### Bonding

The wood based panels and the thermally insulating layer are preferably bonded together with an adhesive.

The adhesive may be an adhesive resin. The adhesive resin may be provided in the form or a dry powder, for example as a hot melt adhesive, or as a liquid or as a combination thereof.

The adhesive may be applied so as to form an adhesive layer or adhesive layers which uniformly cover at least a part, in particular all or essentially all, of the adjacent surfaces. The adhesive may also or alternatively be applied in the form of discontinuous spots or stripes.

The adhesive may comprise or consist of a thermosetting polymer. Such thermosetting polymer may be selected from the groups of phenol-formaldehyde adhesives, melamine-formaldehyde adhesives, urea-formaldehyde adhesives, polyurethane adhesives and lignin based resins and combinations thereof.

The adhesive may be applied on the wood-based panels and/or the layer of cork material in manners known per se, for example by coating or spraying. In one embodiment, the adhesive is applied in the form of fibrous sheets which have been impregnated with adhesive.

In some embodiments, the wood based panels, or the layers that are to constitute the wood-based panels, and the at least one thermally insulating layer, or the layers that are to constitute the thermally insulating layer, are stacked and bonded together with adhesive layers by using elevated temperature and elevated pressure, such as by hot-pressing, to form the core board. The hot-pressing may comprise single-pressing. Advantageously, the thermally insulating layer is a multilayered structure, such as a coated board, whereby it may better tolerate pressing without any significant increase of density.

### Coatings

One or both of the wood-based panels may comprise a coating.

There may be a coating on one or both sides, i.e. on one or both outer surfaces, of the wood-based panel.

In one embodiment, the wood-based panel comprises a coating on the side of the panel that is facing the layer of a cork material. Such a coating may improve or facilitate the adhesive bonding between the wood-based panel and the cork layer, which is mainly provided by an adhesive layer placed between the wood-based panel and the cork layer.

In one embodiment, the wood-based panel comprises a coating on the side of the panel that is on the opposite side with regard to (i.e. not facing) the thermally insulating layer. Such a coating may provide a surface that can be easily painted or otherwise finished, optionally by first arranging a primer layer on said surface to be painted.

Typically, the coating comprises at least one polymer resin coating layer having a surface weight of about 100 to 500 g/m², for example 120 to 250 g/m².

The coating may comprise 1 to 10, typically 1 to 5 coating layers of the indicated kind.

The "polymer resin" layer is preferably a layer formed by a resin selected from phenol-formaldehyde adhesives, melamine-formaldehyde adhesives, urea-formaldehyde adhesives, polyurethane adhesives and lignin based resins and combinations thereof. In particular, the overlay comprises phenol-formaldehyde resin.

The panel can have a film-facing or a coating comprising a film or paper. For example, the coating may comprise a resin coating, such as a phenolic resin coating, in the form of a paper substrate impregnated with a resin, such as a phenolic resin. The paper substrate, before impregnation, typically has a grammage of 40 to 80 g/m². After impregnation, the paper substrate may contain 80 to 140 g/m² of a resin, in particular of a phenolic resin.

In one embodiment, wherein the coating comprises a paper substrate impregnated with a resin, the coating is applied on the surface of the wood-based panel, such a plywood board, by pressing, in particular by hot pressing.

In another embodiment, the coating is attached to the wood-based panel by using a separate layer of a phenolic resin, in particular a heat-activated phenolic resin, impregnated in a substrate, such as a non-woven substrate. Such a glue layer (or adhesive layer), will firmly bind the coating layer to the surface of the wood-based panel.

In some embodiments, the coating of the wood-based panel comprises or consists of a resin and/or plant-based fibres.

### Shape and applications of the core board

Typically, the core board is a planar structure, such as an elongated planar structure. It may have dimensions in the range from 10... 15,000 mm times 10...20,000 mm. In particular the present board may have a width of 50...2,500 mm and a length of 300... 13,500 mm. The thickness of the core board is generally between 3 and 250 mm, in particular 4 to 120 mm.

In an embodiment, the thickness of the core board is at least 5 mm, such as at least 10 mm, for example at least 30 mm.

In an embodiment, the thickness of the core board is in the range 18 to 120 mm, such as less than 150 mm, such as less than 140 mm, for example less than 70 mm.

In an embodiment, the thickness of the core board is less than 140 mm and it has U value less than 0.6 W/m²K.

In an embodiment, the thickness of the core board is less than 70 mm and it has U value less than 1 W/m²K.

The core board according to some embodiments may be utilized as a construction board or a building board, such as a core board for a door blank.

The core board according to some embodiments may be utilized as a load-bearing structural board, such as a load-bearing structural core board for a door.

Preferably the core board is used for manufacturing of doors, such as interior doors or entrance doors, for example entrance doors in a passive house. The core board may form a core structure or a blank of a door.

Preferably, the U value of the core board is less than 1.8 W/m²K.

In an embodiment, the core board is configured to be used as a load bearing part or core in a door.

In an embodiment, the core board is configured to be incorporated in a door structure without any load-bearing frame or other load-bearing structure for holding the core board.

In an embodiment, the core board does not comprise any frame along or around its periphery.

FIGURE 1 illustrates a core board in accordance with at least some embodiments of the present invention. The core board comprises two wood-based panels 1, 2 and a thermally insulating layer 3 between the wood-based panels.

### EXAMPLES

### Example 1

A core board was assembled from two LVL boards and a cork board by gluing the LVL boards on both sides of the cork board. The thickness of the LVL boards was 27 mm. The cork board consisted of standard black insulation cork or torrefied cork and had a thickness of 15 mm.

In an alternative embodiment, the LVL boards were replaced by spruce plywood boards having the same thickness, 27 mm.

It was observed that the U value of the core boards was in both cases less than 1.0 W/m²K.

### Example 2

A core board was assembled from two coated birch plywood boards and a cork board by gluing the coated plywood boards on both sides of the cork board.

The thickness of the coated plywood boards was 15 mm. Both plywood boards had a phenolic coating on both sides, i.e. on the side facing the cork board and on the side that is opposite to the cork board.

The cork board consisted of standard black insulation cork or torrefied cork and had a thickness of 15 mm.

It was observed that the U value of the core board was less than 1.4 W/m²K.

### Example 3

A core board was assembled from two birch plywood boards and a balsa plywood board by gluing the birch plywood boards on both sides of the balsa plywood board. The balsa plywood board could be replaced by a vertically glued balsa wood panel.

The balsa plywood board had a thickness of 15 mm.

It was observed that the U value of the core board was less than 1.8 W/m²K.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The present invention is industrially applicable at least in the manufacturing of thermally insulating composite structures.

### ACRONYMS LIST

- LVL: laminated veneer lumber
- OSB: oriented strand board
- PGW: pressure groundwood
- SGW: stone groundwood

### REFERENCE SIGNS LIST

- 1,2: wood-based panels
- 3: thermally insulating layer

## Claims

1. A core board for a door, the core board having a multi-layered structure and comprising:
- a first wood-based panel;
- a second wood-based panel;
- between the first wood-based panel and the second wood-based panel, a thermally insulating layer comprising or consisting of a wood-based material,
wherein the density of the thermally insulating layer is less than the density of the first and the second wood-based panels,
wherein the core board has a U value of less than 1.8 W/m²K.

2. The core board according to claim 1, wherein the density of the thermally insulating layer is less than 300 kg/m³.

3. The core board according to any of the preceding claims, wherein the density of the wood-based panels is more than 500 kg/m³.

4. The core board according to any of the preceding claims, wherein the wood-based material of the thermally insulating layer comprises a cork-based material.

5. The core board according to any of the preceding claims, wherein the cork-based material comprises or consists of cork oak (*Quercus suber* or *Quercus variabilis*)*.*

6. The core board according to any of the preceding claims, wherein the cork-based material comprises or consists of torrefied cork oak.

7. The core board according to any of the preceding claims, wherein the cork-based material comprises a composite cork material which preferably comprises torrefied cork oak and a binder.

8. The core board according to any of the preceding claims, wherein the cork-based material has a density in the range 60 to 250 kg/m³, for example less than 200 kg/m³.

9. The core board according to any of the preceding claims, wherein the wood-based material of the thermally insulating layer comprises a balsa tree based material.

10. The core board according to any of the preceding claims, wherein the balsa tree based material comprises *Ochroma pyramidale.*

11. The core board according to any of the preceding claims, wherein the balsa tree based material has a density in the range 60 to 380 kg/m³.

12. The core board according to any of the preceding claims, wherein the thermally insulating layer comprises a balsa plywood board or an end-grain balsa panel.

13. The core board according to any of the preceding claims, wherein the thermally insulating layer comprises at least one foam-formed wood pulp layer manufactured on a wire or in a mould.

14. The core board according to any of the preceding claims, wherein the wood pulp comprises mechanical pulp, thermomechanical pulp or chemithermomechanical pulp or any mixture thereof.

15. The core board according to any of the preceding claims, wherein the thermally insulating layer comprises a monolithic material which preferably has a substantially uniform density throughout the material.

16. The core board according to any of the preceding claims, wherein the thermally insulating layer has been attached to said wood-based panels by adhesive layers.

17. The core board according to any of the preceding claims, wherein the first wood-based panel, the second wood-based panel, and the thermally insulating layer are in the form of substantially planar boards.

18. The core board according to any of the preceding claims, wherein at least 80 wt-%, such as at least 90 wt-% of the material of the wood-based panel is wood material, such as wood chips, wood strands, wood fibres, wood veneers and/or solid wood.

19. The core board according to any of the preceding claims, wherein the wood-based panel comprises a multi-layered wood veneer product comprising a plurality of wood veneer layers joined to each other by adhesive layers.

20. The core board according to any of the preceding claims, wherein at least one, preferably both of the first and second wood-based panels comprise an LVL board.

21. The core board according to any of the preceding claims, wherein at least one, preferably both of the first and second wood-based panels comprise a plywood board.

22. The core board according to any of the preceding claims, wherein the multilayered wood veneer product comprises a phenolic coating layer, for example a paper substrate impregnated with phenolic resin.

23. The core board according to any of the preceding claims, wherein the core board comprises less than 5 wt-% plastic materials.

24. The core board according to any of the preceding claims, having U value of less than 1.6 W/m²K, such as less than 1.4 W/m²K, for example less than 1.0 W/m²K.

25. The core board according to claim 1, comprising or consisting of
- a first wood-based panel consisting of an LVL board or a plywood board;
- a second wood-based panel consisting of an LVL board or a plywood board;
- between the first wood-based panel and the second wood-based panel, a thermally insulating layer comprising or consisting of agglomerated cork or torrefied cork oak or composite cork material.

26. The core board according to claim 1, comprising or consisting of
- a first wood-based panel consisting of an LVL board or a plywood board;
- a second wood-based panel consisting of an LVL board or a plywood board;
- between the first wood-based panel and the second wood-based panel, a thermally insulating layer comprising or consisting of balsa plywood or end-grain balsa wood.

27. A door, preferably an entrance door, comprising the core board according to any of the preceding claims.

28. The door according to claim 27, wherein the door has an U value of less than 1.8 W/m²K.

29. A method for manufacturing a multi-layered core board for a door, the method comprising:
- providing a first wood-based panel and a second wood-based panel;
- arranging a thermally insulating layer comprising or consisting of a wood-based material between said wood-based panels and applying adhesive layers between the wood based panels and the thermally insulating layer;
- curing the adhesive layers to join the wood-based panels and the thermally insulating layer to each other, to obtain the multi-layered core board,
wherein the density of the thermally insulating layer is less than the density of the first and the second wood-based panels, and
wherein the core board has a U value of less than 1.8 W/m²K.

30. A method for manufacturing a multi-layered core board for a door, the method comprising :
- providing a plurality of wood veneer layers;
- stacking said wood veneer layers and a layer of a thermally insulating material and applying adhesive layers between the layers, to form a stack, wherein the layer of a thermally insulating material forms an inner layer, preferably the centremost layer, in the stack; and
- curing the adhesive layers to join the layers to each other, to obtain the multi-layered core board,
wherein the thermally insulating layer comprises or consists of a wood-based material,
wherein the density of the thermally insulating layer is less than the density of the first and the second wood-based panels, and
wherein the core board has a U value of less than 1.8 W/m²K.

31. The method according to claim 29 or claim 30, wherein said curing comprises pressing in an elevated temperature, such as hot-pressing.

32. Use of torrefied cork oak or agglomerated cork or composite cork material in a thermally insulating layer or a part thereof in a door, particularly in a core board of a door.

33. Use of a balsa tree based material in a thermally insulating layer or a part thereof in a door, particularly in a core board of a door.

34. The use according to claim 33, wherein the balsa tree based material comprises balsa plywood or end-grain balsa wood.

35. Use of foam-formed wood pulp in a thermally insulating layer or a part thereof in a door, particularly in a core board of a door.

36. The use according to claim 35, wherein the wood pulp comprises mechanical pulp, thermomechanical pulp or chemithermomechanical pulp.

37. The use according to claim 35 or claim 36, wherein the wood pulp comprises moulded pulp.

38. The use according to any of claims 32 to 37, wherein the thermally insulating layer is a self-supporting layer.
